# EUROPEAN PATENT APPLICATION

(11) **EP 4 769 663 A1**
(43) Date of publication of application: **01.07.2026**
(21) Application number: 25797691.0
(22) Date of filing: 28.04.2025
(51) Int. Cl.: H01M 10/6556, H01M 10/613, H01M 10/6565, H01M 10/6568

(54) **PACK HOUSING AND BATTERY PACK COMPRISING SAME**

(30) Priority: 02.05.2024 KR 20240058647
(71) Applicant: LG Energy Solution, Ltd., Seoul 07335 (KR)
(72) Inventor: SHIN, Ju Hwan, Daejeon 34122 (KR); HUR, Nam Hoon, Daejeon 34122 (KR)
(74) Representative: Plasseraud IP
(86) International application number: PCT/KR2025/005709
(87) International publication number: WO 2025/230253

(57) **Abstract**

Example embodiments provide a pack housing. The pack housing includes a first base plate including a first cooling channel extending in a first direction, a second base plate including a second cooling channel extending in the first direction, a third base plate including a third cooling channel extending in the first direction, and a fourth base plate including a fourth cooling channel extending in the first direction, a length of the first cooling channel in the first direction is the same as a length of the first base plate in the first direction, a length of the second cooling channel in the first direction is the same as a length of the second base plate in the first direction, a length of the third cooling channel in the first direction is the same as a length of the third base plate in the first direction, a length of the fourth cooling channel in the first direction is the same as a length of the fourth base plate in the first direction, the first base plate is spaced apart from the third base plate with the second base plate therebetween, the second base plate is spaced apart from the fourth base plate with the first base plate therebetween, and the first to fourth cooling channels are connected in series.

## Description

### [Technical Field]

The present disclosure relates to a pack housing and a battery pack including the same. The present application claims the benefit of priority based on Korean Patent Application No. 10-2024-0058647, filed on May 2, 2024, and the entire contents of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. The safety of secondary batteries may be achieved through mechanical robustness, reliability of electrical insulation, and heat transfer delay when a thermal runaway event occurs.

### [Disclosure]

### [Technical Problem]

The present disclosure is directed to providing a pack housing with improved reliability and mechanical robustness, and a battery pack including the pack housing.

### [Technical Solution]

Embodiments of the present disclosure provide a pack housing. The pack housing includes a first base plate including a first cooling channel extending in a first direction, a second base plate including a second cooling channel extending in the first direction, a third base plate including a third cooling channel extending in the first direction, and a fourth base plate including a fourth cooling channel extending in the first direction, in which a length of the first cooling channel in the first direction is the same as a length of the first base plate in the first direction, a length of the second cooling channel in the first direction is the same as a length of the second base plate in the first direction, a length of the third cooling channel in the first direction is the same as a length of the third base plate in the first direction, a length of the fourth cooling channel in the first direction is the same as a length of the fourth base plate in the first direction, the first base plate is spaced apart from the third base plate with the second base plate therebetween, the second base plate is spaced apart from the fourth base plate with the first base plate therebetween, and the first to fourth cooling channels are connected in series.

The first to fourth cooling channels may be sequentially connected in series.

The first base plate may include a first connection channel connected to the first cooling channel and extending in a second direction perpendicular to the first direction, the second base plate may include a second connection channel connected to the second cooling channel and extending in the second direction, and the first connection channel may be connected to the second connection channel.

The second base plate may include a third connection channel connected to the second cooling channel, extending in the second direction, and spaced apart from the second connection channel in the first direction, the third base plate may include a fourth connection channel connected to the third cooling channel and extending in the second direction, and the third connection channel may be connected to the fourth connection channel.

The second base plate may include a third connection channel connected to the second cooling channel, extending in the second direction, and spaced apart from the second connection channel in the first direction, the third base plate may include a fourth connection channel connected to the third cooling channel and extending in the second direction, and the third connection channel may be connected to the fourth connection channel.

The third base plate may include a first via connected to the third cooling channel and extending in a third direction perpendicular to each of the first and second directions.

The fourth base plate may include a second via connected to the fourth cooling channel and extending in the third direction.

The pack housing may further include a cooling cover overlapping the first and second vias in the third direction.

The cooling cover may be welded to the first to fourth base plates.

Embodiments of the present disclosure provide a pack housing including a first base plate including first cooling channels extending in a first direction, a second base plate including second cooling channels extending in the first direction, a third base plate including third cooling channels extending in the first direction, and a fourth base plate including fourth cooling channels extending in the first direction, in which the first base plate includes first and second connection channels connecting the first cooling channels to each other and extending in a second direction perpendicular to the first direction, the first and second connection channels are spaced apart from each other in the first direction, the second base plate includes third and fourth connection channels connecting the second cooling channels to each other and extending in the second direction, the third and fourth connection channels are spaced apart from each other in the first direction, the third base plate includes fifth and sixth connection channels connecting the third cooling channels to each other and extending in the second direction, the fifth and sixth connection channels are spaced apart from each other in the first direction, the fourth base plate includes seventh and eighth connection channels connecting the fourth cooling channels to each other and extending in the second direction, the seventh and eighth connection channels are spaced apart from each other in the first direction, the second connection channels are connected to the third connection channels, and the fifth connection channels are connected to the fourth connection channels.

The first base plate may be spaced apart from the third base plate with the second base plate therebetween, the second base plate may be spaced apart from the fourth base plate with the first base plate therebetween, and the first to fourth cooling channels may be connected in series.

The pack housing may further include a cooling cover welded to the first to fourth base plates.

The third base plate may include a first via connected to the third cooling channels and extending in a third direction perpendicular to the first and second directions, the fourth base plate may include a second via connected to the fourth cooling channels and extending in the third direction, and the first and second vias may overlap the cooling cover in the third direction.

### [Advantageous Effects]

According to embodiments of the present disclosure, a flow rate of a cooling fluid in a base plate can be increased to improve cooling efficiency using the base plate.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a top view of a pack housing according to embodiments.
FIG. 2 is a bottom view of a pack housing according to embodiments.
FIG. 3 is a cross-sectional view taken along line 1I-1I' of FIG. 1.
FIG. 4 is a cross-sectional view taken along line 1II-1II' of FIG. 1.
FIG. 5 is a cross-sectional view taken along line 1III-1III' of FIG. 1.
FIG. 6 illustrates a flow of a cooling fluid through cooling channels of the pack housing of FIG. 1.
FIG. 7 is a top view of a pack housing according to embodiments.
FIG. 8 is a bottom view of a pack housing according to embodiments.
FIG. 9 is a cross-sectional view taken along line 7I-7I' of FIG. 7.
FIG. 10 is a cross-sectional view taken along line 7II-7II' of FIG. 7.
FIG. 11 is a cross-sectional view taken along line 7III-7III' of FIG. 7.
FIG. 12 is a plan view of a battery pack according to embodiments.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

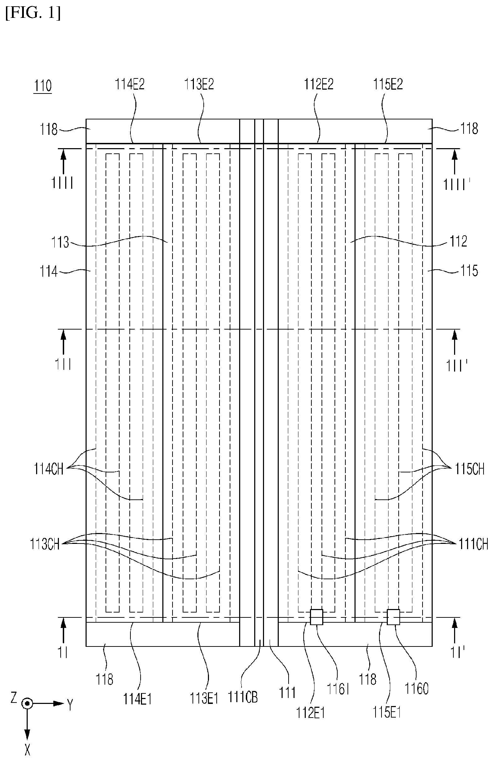

FIG. 1 is a top view of a pack housing 110 according to embodiments.

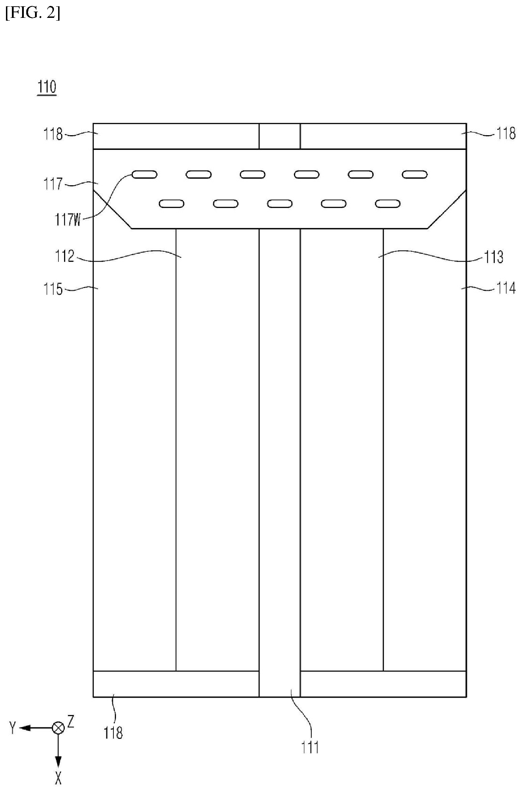

FIG. 2 is a bottom view of the pack housing 110 according to embodiments.

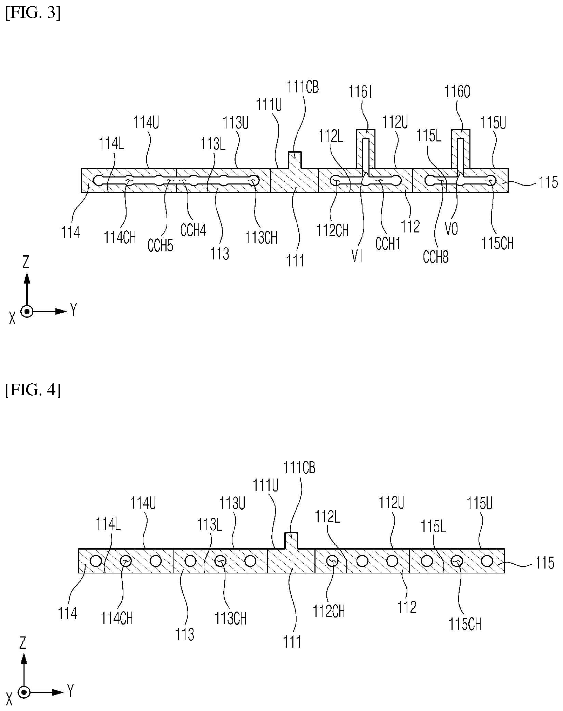

FIG. 3 is a cross-sectional view taken along line 1I-1I' of FIG. 1.

FIG. 4 is a cross-sectional view taken along line 1II-1II' of FIG. 1.

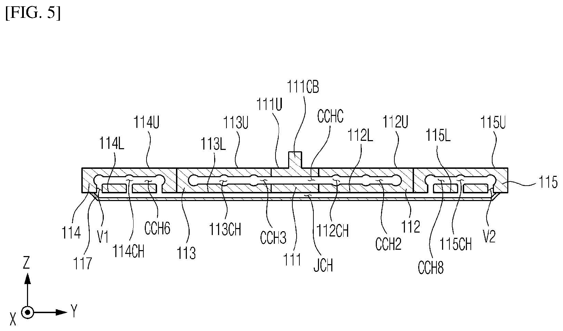

FIG. 5 is a cross-sectional view taken along line 1III-1III' of FIG. 1.

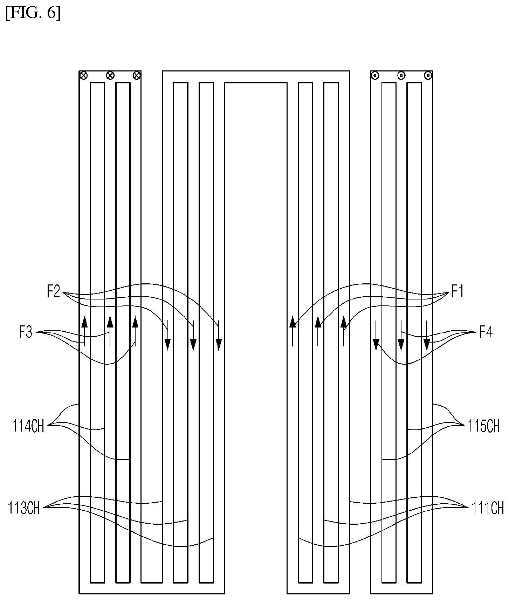

FIG. 6 illustrates a flow of a cooling fluid through cooling channels of the pack housing 110 of FIG. 1.

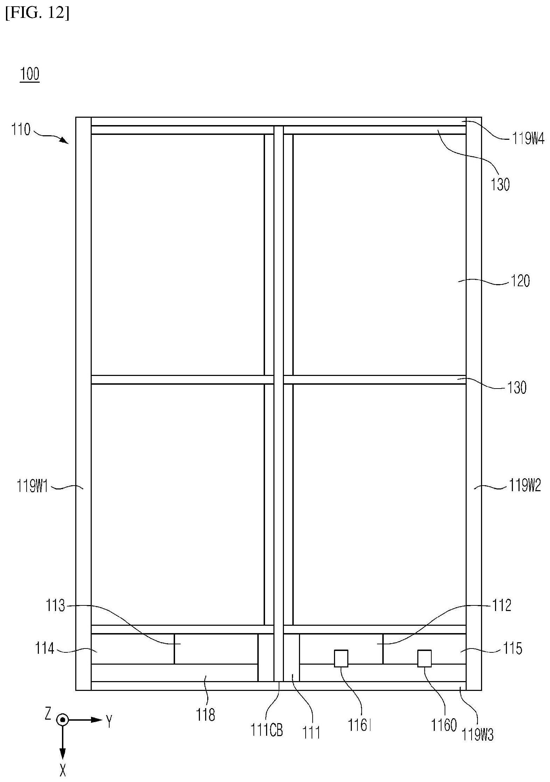

Referring to FIGS. 1 to 6, the pack housing 110 may provide a space for mounting battery cell assemblies 120 (see FIG. 12), which will be described below. The pack housing 110 may include a center plate 111, first to fourth base plates 112, 113, 114 and 115, an inlet port 116I, an outlet port 116O, a cooling cover 117, and end covers 118.

The center plate 111 may include a center beam 111CB. The center beam 111CB may protrude from an upper surface 111U of the center plate 111. The center beam 111CB may extend in an X-axis direction.

The first base plate 112 may include an upper surface 112U and a lower surface 112L. The upper surface 112U and the lower surface 112L may be opposite to each other. The second base plate 113 may include an upper surface 113U and a lower surface 113L. The upper surface 113U and the lower surface 113L may be opposite to each other. The third base plate 114 may include an upper surface 114U and a lower surface 114L. The upper surface 114U and the lower surface 114L may be opposite to each other. The fourth base plate 115 may include an upper surface 115U and a lower surface 115L. The upper surface 115U and the lower surface 115L may be opposite to each other.

The upper surfaces 112U, 113U, 114U and 115U may be substantially parallel to one another. The upper surfaces 112U, 113U, 114U and 115U may be at the same level. The upper surfaces 112U, 113U, 114U, and 115U may be coplanar.

The lower surfaces 112L, 113L, 114L, and 115L may be substantially parallel to one another. The lower surfaces 112L, 113L, 114L, and 115L may be at the same level. The lower surfaces 112L, 113L, 114L, and 115L may be coplanar.

Two directions substantially parallel to each of the upper surfaces 112U, 113U, 114U, and 115U are defined as the X-axis direction and a Y-axis directions, and a direction substantially perpendicular to each of the upper surfaces 112U, 113U, 114U, and 115U is defined as a Z-axis direction. The X-axis direction, the Y-axis direction, and the Z-axis direction may be substantially perpendicular to one another. Unless otherwise mentioned, the definition of the directions will apply to the following drawings.

Each of the center plate 111 and the first to fourth base plates 112, 113, 114, and 115 may be provided by an extrusion process. An extrusion direction of each of the center plate 111 and the first to fourth base plates 112, 113, 114, and 115 may be the X-axis direction. That is, a YZ cross-section of each of the center plate 111 and the first to fourth base plates 112, 113, 114, and 115 may be constant according to a position in the X-axis direction except for deformation due to additional tooling. Here, the YZ cross-section may be substantially parallel to the Y-axis direction and the Z-axis direction and be substantially perpendicular to the X-axis direction. The base plate 111 and the side walls 112 and 113 may be arranged in the Y-axis direction. The side walls 114 and 115 may also be provided by the extrusion process.

In an example of the additional tooling described above, first to eighth connection channels CCH1, CCH2, CCH3, CCH4, CCH5, CCH6, CCH7 and CCH8, an input vias V1 via VI, an output via VO, and first and second and vias V1, V2 may be provided.

The elements referred to above as channels and/or vias may be empty spaces inside the first to fourth base plates 112, 113, 114, and 115 that allow a cooling fluid to flow therethrough, or spaces between the first to fourth base plates 112, 113, 114 and 115 and the cooling cover 117. Accordingly, that the channels and/or the vias are connected to each other should be understood to mean that the flow of a fluid between them is allowable. For example, because the first cooling channels 112CH and the first connection channels CCH1 are connected, the flow of a fluid between the first connection channels CCH1 and the first cooling channels 112CH is allowable.

The battery cell assemblies 120 (see FIG. 4) may be on the center plate 111 and the upper surfaces 112U, 113U, 114U, and 115U of the side plates 112, 113, 114, and 115.

The center plate 111 and the first to fourth base plates 112, 113, 114, and 115 may be arranged in the Y-axis direction. The first and fourth base plates 112 and 115 may be spaced apart from the second and third base plates 113 and 114 in the Y-axis direction with the center plate 111 therebetween.

The first base plate 112 may be interposed between the center plate 111 and the fourth base plate 115. The first base plate 112 may be in contact with each of the center plate 111 and the fourth base plate 115. For example, the first base plate 112 may be coupled to each of the center plate 111 and the fourth base plate 115 by friction stir welding. Accordingly, there may be welded surfaces between the first base plate 112 and the center plate 111 and between the first base plate 112 and the fourth base plate 115.

The second base plate 113 may be interposed between the center plate 111 and the third base plate 114. The second base plate 113 may be in contact with each of the center plate 111 and the third base plate 114. For example, the second base plate 113 may be coupled to each of the center plate 111 and the third base plate 114 by friction stirring welding. Accordingly, there may be welded surfaces between the second base plate 113 and the center plate 111 and between the second base plate 113 and the third base plate 114.

However, the present disclosure is not limited thereto, and the center plate 111 and the side plates 112, 113, 114, and 115 may be combined with each other by arc welding, laser welding, electron beam welding, friction welding, ultrasonic welding, or the like.

The first base plate 112 may include first cooling channels 112CH. Each of the first cooling channels 112CH may extend in the X-axis direction. The first cooling channels 112CH may provide a passage through which a cooling fluid flows. The first cooling channels 112CH may be arranged in the Y-axis direction. The first cooling channels 112CH may be spaced apart from each other in the Y-axis direction.

A length of each of the first cooling channels 112CH in the X-axis direction may be substantially the same as a length of the first base plate 112 in the X-axis direction. Each of the first cooling channels 112CH may be spaced apart from the upper surface 112U and the lower surface 112L of the first base plate 112. Each of the first cooling channels 112CH may be interposed between the upper surface 112U and the lower surface 112L of the first base plate 112.

The second base plate 113 may include second cooling channels 113CH. Each of the second cooling channels 113CH may extend in the X-axis direction. The second cooling channels 113CH may provide a passage through which the cooling fluid flows. The second cooling channels 113CH may be arranged in the Y-axis direction. The second cooling channels 113CH may be spaced apart from each other in the Y-axis direction.

A length of each of the second cooling channels 113CH in the X-axis direction may be substantially the same as a length of the second base plate 113 in the X-axis direction. Each of the second cooling channels 113CH may be spaced apart from the upper surface 113U and the lower surface 113L of the second base plate 113. Each of the second cooling channels 113CH may be interposed between the upper surface 113U and the lower surface 113L of the second base plate 113.

The third base plate 114 may include third cooling channels 114CH. Each of the third cooling channels 114CH may extend in the X-axis direction. The third cooling channels 114CH may provide a passage through which the cooling fluid flows. The third cooling channels 114CH may be arranged in the Y-axis direction. The third cooling channels 114CH may be spaced apart from each other in the Y-axis direction.

A length of each of the third cooling channels 114CH in the X-axis direction may be substantially the same as a length of the third base plate 114 in the X-axis direction. Each of the third cooling channels 114CH may be spaced apart from the upper surface 114U and the lower surface 114L of the third base plate 114. Each of the third cooling channels 114CH may be interposed between the upper surface 114U and the lower surface 114L of the third base plate 114.

The fourth base plate 115 may include fourth cooling channels 115CH. Each of the fourth cooling channels 115CH may extend in the X-axis direction. The fourth cooling channels 115CH may provide a passage through which the cooling fluid flows. The fourth cooling channels 115CH may be arranged in the Y-axis direction. The fourth cooling channels 115CH may be spaced apart from each other in the Y-axis direction.

A length of each of the fourth cooling channels 115CH in the X-axis direction may be substantially the same as a length of the fourth base plate 115 in the X-axis direction. Each of the fourth cooling channels 115CH may be spaced apart from the upper surface 115U and the lower surface 115L of the fourth base plate 115. Each of the fourth cooling channels 115CH may be interposed between the upper surface 115U and the lower surface 115L of the fourth base plate 115.

The first base plate 112 may include the first and second connection channels CCH1 and CCH2. The first connection channels CCH1 may be spaced apart from the second connection channels CCH2 in the X-axis direction. The first and second connection channels CCH1 and CCH2 may extend in the Y-axis direction. The first and second connection channels CCH1 and CCH2 may connect the first cooling channels 112CH. The first connection channels CCH1 may be adjacent to a first end portion 112E1 of the first base plate 112 in the X-axis direction. The second connection channels CCH2 may be adjacent to a second end portion 112E2 of the first base plate 112 in the X-axis direction.

The first base plate 112 may further include the input via VI. The input via VI may extend in the Z-axis direction. The input via VI may be spaced apart from the second connection channels CCH2 in the X-axis direction. The input via VI may be connected to the first cooling channels 112CH and the first connection channels CCH1. Accordingly, a cooling fluid supplied through the input port 116I may be introduced into the first cooling channels 112CH and the first connection channels CCH1 through the input via VI.

The second base plate 113 may include the third and fourth connection channels CCH3 and CCH4. The third connection channels CCH3 may be spaced apart from the fourth connection channels CCH4 in the X-axis direction. The third and fourth connection channels CCH3 and CCH4 may extend in the Y-axis direction. The third and fourth connection channels CCH3 and CCH4 may connect the second cooling channels 113CH. The fourth connection channels CCH4 may be adjacent to a first end portion 113E1 of the second base plate 113 in the X-axis direction. The third connection channels CCH3 may be adjacent to a second end portion 113E2 of the second base plate 113 in the X-axis direction.

The third base plate 114 may include the fifth and sixth connection channels CCH5 and CCH6. The fifth connection channels CCH5 may be spaced apart from the sixth connection channels CCH6 in the X-axis direction. The fifth and sixth connection channels CCH5 and CCH6 may extend in the Y-axis direction. The fifth and sixth connection channels CCH5 and CCH6 may connect the third cooling channels 114CH. The fifth connection channels CCH5 may be adjacent to a first end portion 114E1 of the third base plate 114 in the X-axis direction. The sixth connection channels CCH6 may be adjacent to a second end portion 114E2 of the third base plate 114 in the X-axis direction.

The third base plate 114 may further include the first vias V1. Each of the first vias V1 may extend in the Z-axis direction. Each of the first vias V1 may be connected to the third cooling channels 114CH and the sixth connection channels CCH6. Each of the first vias V1 may be spaced apart from the fifth connection channels CCH5 in the X-axis direction.

The fourth base plate 115 may include the seventh and eighth connection channels CCH7 and CCH8. The seventh connection channels CCH7 may be spaced apart from the eighth connection channels CCH8 in the X-axis direction. The seventh and eighth connection channels CCH7 and CCH8 may extend in the Y-axis direction. The seventh and eighth connection channels CCH7 and CCH8 may connect the fourth cooling channels 115CH. The seventh connection channels CCH7 may be adjacent to a first end portion 115E1 of the fourth base plate 115 in the X-axis direction. The eighth connection channels CCH8 may be adjacent to a second end portion 115E2 of the fourth base plate 115 in the X-axis direction.

The fourth base plate 115 may further include the second vias V2. Each of the second vias V2 may extend in the Z-axis direction. Each of the second vias V2 may be connected to the fourth cooling channels 115CH and the seventh connection channels CCH7. Each of the second vias V2 may be spaced apart from the eighth connection channels CCH8 in the X-axis direction.

The fourth base plate 115 may further include the output via VO. The output via VO may extend in the Z-axis direction. The output vias VO may be spaced apart from the second vias V2 in the X-axis direction. The output via VO may be spaced apart from the seventh connection channels CCH7 in the X-axis direction. The output via VO may be connected to the fourth cooling channels 115CH and the eighth connection channels CCH8. Accordingly, the cooling fluid flowing through the fourth cooling channels 115CH and converging in the eighth connection channels CCH8 may be discharged through the output via VO and the output port 116O.

The cooling fluid introduced through the inlet port 116I may be distributed to the first cooling channels 112CH via the first connection channels CCH1. Accordingly, the cooling fluid distributed to the first cooling channel 112CH may move in the X-axis direction, as indicated by an arrow F1 denoting a first flow. The cooling fluid flowing along the first cooling channels 112CH may converge in the second connection channels CCH2. The second connection channels CCH2 may be connected to the third connection channels CCH3. A center connection channel CCHC of the center plate 111 may be interposed between the second connection channels CCH2 and the third connection channels CCH3, and the second connection channels CCH2 and the third connection channels CCH3 may be connected through the center connection channel CCHC.

The cooling fluid flowing along the first cooling channels 112CH may be transmitted to the second cooling channels 113CH through the second and third connection channels CCH2 and CCH3. The cooling fluid may be distributed to the second cooling channels 113CH through the third connection channels CCH3. Accordingly, the cooling fluid distributed to the second cooling channels 113CH may move in the X-axis direction, as indicated by an arrow F2 denoting a second flow. The cooling fluid flowing along the second cooling channels 113CH may converge in the fourth connection channels CCH4. The fourth connection channels CCH4 may be connected to the fifth connection channels CCH5.

The cooling fluid flowing along the second cooling channels 113CH may be transmitted to the third cooling channels 114CH through the fourth and fifth connection channels CCH4 and CCH5. The cooling fluid may be distributed to the third cooling channels 114CH via the fifth connection channels CCH5. Accordingly, the cooling fluid distributed to the third cooling channels 114CH may move in the X-axis direction, as indicated by an arrow F3 denoting a third flow. The cooling fluid flowing along the third cooling channels 114CH may converge in the sixth connection channels CCH6. The sixth connection channels CCH6 may be connected to the first vias V1.

The cooling cover 116 may be on the lower surfaces 112L, 113L, 114L and 115L of the first to fourth base plates 112, 113, 114 and 115. The cooling cover 116 may be adjacent to the second end portions 112E2, 113E2, 114E2 and 115E2 of the first to first base plates 112, 113, 114 and 115. The cooling cover 116 may overlap the first vias V1 of the third base plate 114 and the second vias V2 of the fourth base plate 115 in the Z-axis direction. The cooling fluid introduced into a jumping channel JCH, which is a space between the cooling cover 116 and the lower surfaces 112L, 113L, 114L and 115L, via the first vias V1 may be transmitted to the seventh connection channels CCH7 and the fourth cooling channels 115CH via the second vias V2.

The cooling cover 116 may be welded to the lower surfaces 112L, 113L, 114L and 115L. The cooling cover 116 may be coupled to the lower surfaces 112L, 113L, 114L and 115L by, for example, friction stir welding and thus a plurality of welded patterns 116W may be formed. The plurality of welded patterns 116W may be arranged in a zigzag fashion. The arrangement of the welded patterns 116W in the zigzag fashion may prevent an inhibitory factor such as turbulence of the cooling fluid from occurring in the jumping channel JCH .

The cooling fluid may be distributed to the fourth cooling channels 115CH via the seventh connection channels CCH7. Accordingly, the cooling fluid distributed to the fourth cooling channels 115CH may move in the X-axis direction, as indicated by an arrow F4 denoting a fourth flow. The cooling fluid flowing along the fourth cooling channels 115CH may converge in the eighth connection channels CCH8. The eighth connection channels CCH8 may be connected to the output via VO.

The end covers 118 may be in contact with the first end portions 112E1, 113E1, 114E1 and 115E1 and the second end portions 112E2, 113E2, 114E2 and 115E2 of the first to fourth base plates 112, 113, 114 and 115. The end covers 118 may be welded to the first end portions 112E1, 113E1, 114E1 and 115E1 and the second end portions 112E2, 113E2, 114E2 and 115E2 of the first to fourth base plates 112, 113, 114 and 115, and may block the end portions of the first to fourth cooling channels 112CH, 113CH, 114CH, 115CH in the X-axis direction. Accordingly, the leakage of the cooling fluid flowing through the first to fourth cooling channels 112CH, 113CH, 114CH and 115CH may be prevented.

Due to the configuration and arrangement of the first to fourth base plates 112, 113, 114 and 115 and the cooling cover 117, a cooling path sequentially passing through the first base plate 112, the second base plate 113, the third base plate 114, and the fourth base plate 115 may be provided. Accordingly, the cooling fluid supplied to the input port 116I may be distributed to cooling channels in one base plate, and cooling channels of two or more base plates are not connected in parallel, thereby preventing a decrease in a flow rate of the cooling fluid and improving cooling performance.

### (Second Embodiment)

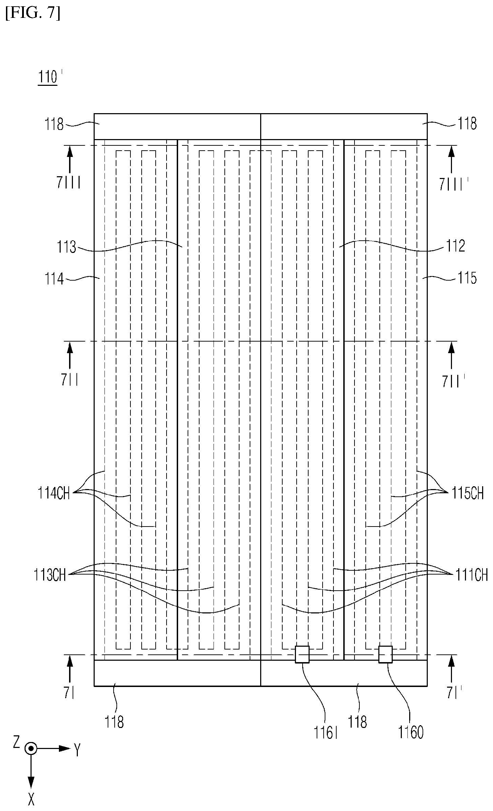

FIG. 7 is a top view of a pack housing 110' according to embodiments.

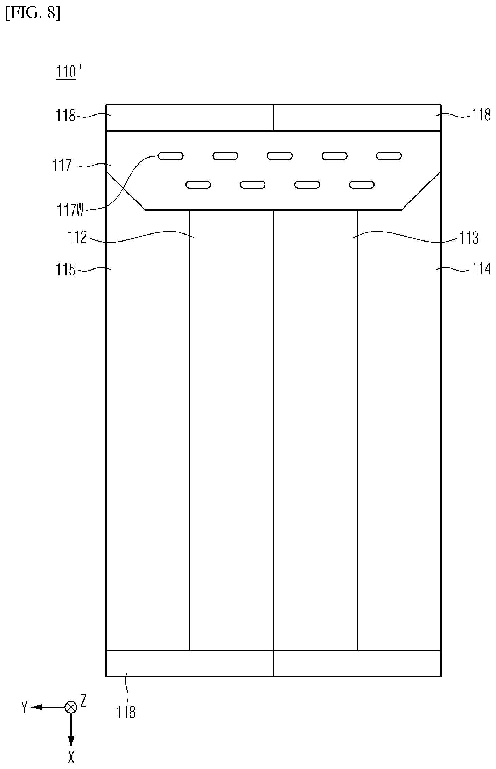

FIG. 8 is a bottom view of the pack housing 110' according to embodiments.

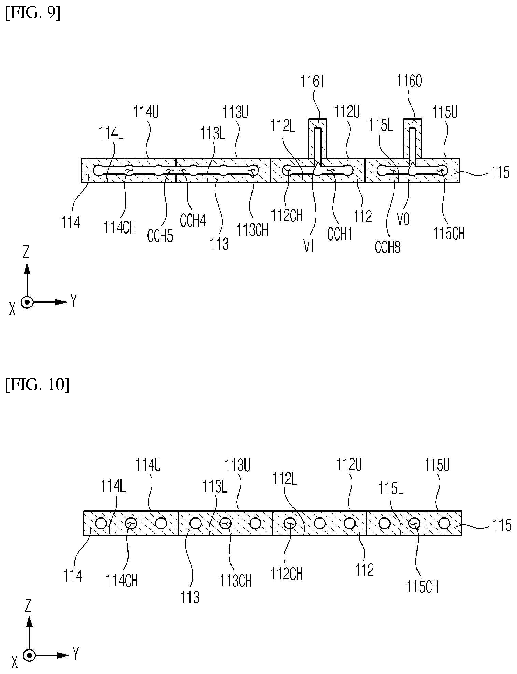

FIG. 9 is a cross-sectional view taken along line 1I-1I' of FIG. 7.

FIG. 10 is a cross-sectional view taken along line 1II-1II' of FIG. 7.

FIG. 5 is a cross-sectional view taken along line 1III-1III' of FIG. 1.

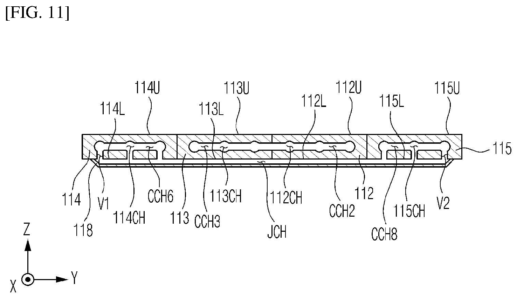

Referring to FIGS. 7 to 11, the pack housing 110' may provide a space for mounting battery cell assemblies 120 (see FIG. 12), which will be described below. The pack housing 110' may include first to fourth base plates 112, 113, 114 and 115, an inlet port 116I, an outlet port 116O, a cooling cover 117', and end covers 118.

The first to fourth base plates 112, 113, 114 and 115, the inlet port 116I, the outlet port 116O, and the end covers 118 are substantially the same as those described above with reference to FIGS. 1 to 6 and thus redundant description thereof is omitted here.

Unlike the pack housing 110 of FIG. 1, the pack housing 110' may not include the center plate 111. A length of the cooling cover 117' in the Y-axis direction may be less than a length of the cooling cover 117 of FIG. 2 in the Y-axis direction. The cooling cover 117' is substantially the same as the cooling cover 117 of FIG. 2 except for the length thereof in the Y-axis direction. Second connection channels CCH2 of the first base plate 112 may be directly connected to third connection channels CCH3' of the second base plate 113.

### (Third Embodiment)

FIG. 12 is a plan view of a battery pack 100 according to embodiments.

Referring to FIGS. 1, 2, and 12, the battery pack 100 may include a pack housing 110, side walls 119W1, 119W2, 119W3 and 119W4, a plurality of battery cell assemblies 120, and cross-beams 130.

The pack housing 110 is substantially the same as that described above with reference to FIGS. 1 to 6. The plurality of battery cell assemblies 120 may be on first to fourth base plates 112, 113, 114, and 115 of the pack housing 110. A center plate 111 and the side plates 112, 113, 114, and 115 may support the plurality of battery cell assemblies 120.

The side walls 119W1, 119W2, 119W3, and 119W4 may be coupled to side surfaces of the first to fourth base plates 112, 113, 114, and 115 or upper surfaces 112U, 113U, 114U, and 115U of the first to fourth base plates 112, 113, 114, and 115. The side walls 119W1, 119W2, 119W3, and 119W4 may be welded to the first to fourth base plates 112, 113, 114, and 115. The side walls 119W1, 119W2, 119W3, and 119W4 may horizontally surround the plurality of battery cell assemblies 120.

For example, the battery pack 100 may be of a moduleless type and each of the plurality of battery cell assemblies 120 may not include a module frame. As another example, the battery pack 100 may be of a module type and each of the plurality of battery cell assemblies 120 may include a module frame.

Each of the plurality of battery cell assemblies 120 may include a plurality of banks connected in series to each other. Each of the plurality of banks may include one or more battery cells connected in parallel. The number of banks connected in series and the number of battery cells connected in parallel may be determined according to a voltage and a current to be output from each of the plurality of battery cell assemblies 120.

A plurality of battery cells are basic units of a lithium ion battery, i.e., a secondary battery. Each of the plurality of battery cells includes an electrode assembly, an electrolyte, and a case. Each of the plurality of battery cells may be a cylindrical battery cell, a prismatic battery cell, or a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a jelly-roll type electrode assembly or a stack type electrode assembly. A jelly-roll type electrode assembly may include a structure in which a positive electrode, a negative electrode, and a separator between the positive and negative electrodes are wound together. A stack type electrode assembly may include a plurality of positive electrodes and a plurality of negative electrodes that are sequentially stacked, and a plurality of separators therebetween.

The plurality of battery cell assemblies 120 may be arranged in the X-axis direction and the Y-axis direction. In FIG. 12, the number of battery cell assemblies 120 arranged in the X-axis direction is three, and the number of battery cell assemblies 120 arranged in the Y-axis direction is two. Accordingly, the array of the plurality of battery cell assemblies 120 may be a 2x2 array. Those of ordinary skill in the art will be able to easily derive the plurality of battery cell assemblies 120 arranged in an MxN array (here, M and N are each an integer of 2 or more), based on the above description.

A center beam 111CB may isolate the plurality of battery cell assemblies 120 in the Y-axis direction. The center beam 111CB may be interposed between the plurality of battery cell assemblies 120 in the Y-axis direction. The cross beams 130 may isolate the plurality of battery cell assemblies 120 in the X-axis direction. The cross-beams 130 may be interposed between the plurality of battery cell assemblies 120 in the X-axis direction. The cross-beams 130 may be integrated into the battery cell assemblies 120.

An arrangement of the center beam 111CB and the plurality of battery cell assemblies 120 shown in FIG. 12 is a non-limiting example and should not be understood as limiting the technical idea of the present disclosure in any sense. A battery pack that includes various numbers and arrangements of a center beam, cross-beams, and battery cell assemblies will be easily derived by technicians of ordinary skill in the art, based on the above description.

The battery pack 100 may further include exhaust devices. The exhaust device may be configured to delay thermal propagation by discharging a high-temperature gas from the inside of the battery pack 100 to the outside when at least one of the plurality of battery cell assemblies 120 is in a thermal runaway state.

Here, a thermal runaway state of the plurality of battery cell assemblies 120 is a state in which a change of temperature of the plurality of battery cell assemblies 120 accelerates the change of temperature, i.e., uncontrollable positive feedback. A temperature of the plurality of battery cell assemblies 120 that are in the thermal runaway state sharply increases, and a large amount of a high-pressure gas and combustion debris are discharged.

The battery pack 100 may further include electronic components. The electronic components may be mounted in the pack housing 110. The electronic components may be interposed, for example, between the cross-beam 130 and the side wall 119W3. The electronic components may include an electronic device required to drive the battery pack 100.

The electronic components may include, for example, a battery management system (BMS). The BMS may be configured to monitor, balance, and control the battery pack 100. The monitoring of the battery pack 100 may include measuring voltages and currents of certain nodes in the plurality of battery cell assemblies 120 and measuring temperatures at set positions in the battery pack 100. The battery pack 100 may include measuring devices for measuring a voltage, a current, and temperature as described above.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions to prevent a decrease in the lifespan of each of the plurality of battery cell assemblies 120.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs.

The battery pack 100 may further include a plurality of bus bars configured to electrically connect the plurality of battery cell assemblies 120. The plurality of battery cell assemblies 120 may be connected in series by the plurality of bus bars. Accordingly, the battery pack 100 may be configured to output a high voltage to an external load (e.g., a motor of a vehicle).

The battery pack 100 may further include a lid coupled to the side walls 119W1, 119W2, 119W3, and 119W4 and additional side walls. The lid may cover elements, such as the battery cell assemblies 120 and the electronic components, inside the battery pack 100. The lid may be fixed to the battery pack 100 by a mechanical coupling means such as a fastening member.

Those of ordinary skill in the art will be able to easily derive a battery pack including the pack housing 110' of FIG. 7 instead of the pack housing 110, based on the description herein.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A pack housing comprising:
a first base plate including a first cooling channel extending in a first direction;
a second base plate including a second cooling channel extending in the first direction;
a third base plate including a third cooling channel extending in the first direction; and
a fourth base plate including a fourth cooling channel extending in the first direction,
wherein a length of the first cooling channel in the first direction is the same as a length of the first base plate in the first direction,
a length of the second cooling channel in the first direction is the same as a length of the second base plate in the first direction,
a length of the third cooling channel in the first direction is the same as a length of the third base plate in the first direction,
a length of the fourth cooling channel in the first direction is the same as a length of the fourth base plate in the first direction,
the first base plate is spaced apart from the third base plate with the second base plate therebetween,
the second base plate is spaced apart from the fourth base plate with the first base plate therebetween, and
the first to fourth cooling channels are connected in series.

2. The pack housing of claim 1, wherein the first to fourth cooling channels are sequentially connected in series.

3. The pack housing of claim 1, wherein the first base plate includes a first connection channel connected to the first cooling channel and extending in a second direction perpendicular to the first direction,
the second base plate includes a second connection channel connected to the second cooling channel and extending in the second direction, and
the first connection channel is connected to the second connection channel.

4. The pack housing of claim 3, wherein the second base plate includes a third connection channel connected to the second cooling channel, extending in the second direction, and spaced apart from the second connection channel in the first direction,
the third base plate includes a fourth connection channel connected to the third cooling channel and extending in the second direction, and
the third connection channel is connected to the fourth connection channel.

5. The pack housing of claim 4, wherein the second base plate includes a third connection channel connected to the second cooling channel, extending in the second direction, and spaced apart from the second connection channel in the first direction,
the third base plate includes a fourth connection channel connected to the third cooling channel and extending in the second direction, and
the third connection channel is connected to the fourth connection channel.

6. The pack housing of claim 5, wherein the third base plate includes a first via connected to the third cooling channel and extending in a third direction perpendicular to each of the first and second directions.

7. The pack housing of claim 6, wherein the fourth base plate includes a second via connected to the fourth cooling channel and extending in the third direction.

8. The pack housing of claim 7, further comprising a cooling cover overlapping the first and second vias in the third direction.

9. The pack housing of claim 8, wherein the cooling cover is welded to the first to fourth base plates.

10. A pack housing comprising:
a first base plate including first cooling channels extending in a first direction;
a second base plate including second cooling channels extending in the first direction;
a third base plate including third cooling channels extending in the first direction; and
a fourth base plate including fourth cooling channels extending in the first direction,
wherein the first base plate includes first and second connection channels connecting the first cooling channels to each other and extending in a second direction perpendicular to the first direction,
the first and second connection channels are spaced apart from each other in the first direction,
the second base plate includes third and fourth connection channels connecting the second cooling channels to each other and extending in the second direction,
the third and fourth connection channels are spaced apart from each other in the first direction,
the third base plate includes fifth and sixth connection channels connecting the third cooling channels to each other and extending in the second direction,
the fifth and sixth connection channels are spaced apart from each other in the first direction,
the fourth base plate includes seventh and eighth connection channels connecting the fourth cooling channels to each other and extending in the second direction,
the seventh and eighth connection channels are spaced apart from each other in the first direction,
the second connection channels are connected to the third connection channels, and
the fifth connection channels are connected to the fourth connection channels.

11. The pack housing of claim 10, wherein the first base plate is spaced apart from the third base plate with the second base plate therebetween,
the second base plate is spaced apart from the fourth base plate with the first base plate therebetween, and
the first to fourth cooling channels are connected in series.

12. The pack housing of claim 10, further comprising a cooling cover welded to the first to fourth base plates.

13. The pack housing of claim 12, wherein the third base plate includes a first via connected to the third cooling channels and extending in a third direction perpendicular to the first and second directions, and
the fourth base plate includes a second via connected to the fourth cooling channels and extending in the third direction,
wherein the first and second vias overlap the cooling cover in the third direction.
